# EUROPEAN PATENT APPLICATION

(11) **EP 1 065 854 A2**
(43) Date of publication of application: **03.01.2001**
(21) Application number: 00305447.5
(22) Date of filing: 28.06.2000
(51) Int. Cl.: H04L 27/18

(54) **Hierarchical modulation**

(30) Priority: 02.07.1999 GB 9915417
(71) Applicant: Tandberg Television ASA, 1326 Lysaker (NO)
(72) Inventor: Markarian, Garegin, Chilworth, Hampshire SO16 7HN (GB); Harding, Wilfrid Brent, Winchester, Hampshire SO22 5NN (GB); Haigh, Peter, Basingstoke, Hampshire RG24 8RS (GB)
(74) Representative: Molyneaux, Martyn William

(57) **Abstract**

A method of coding a plurality of data streams, each having a plurality of data bits, onto a single carrier signal, the method comprising modulating each data bit of a first one of the plurality of data streams with a known coding technique thereby representing the data bit with a first code. For each data bit of the first data stream generating a second code from the first code. Each data bit of a second one of the plurality of data streams is represented with the second code wherein the first and second codes have a predetermined relationship with regards to the relative positions of the data bits in each data stream and modulating the first code with the second code to produce a resultant code representative of the relative bits of both the first and second data streams.

## Description

This invention relates to hierarchical coding, particularly to a hierarchical modulation scheme for digital broadcast signals.

A hierarchical coding scheme and apparatus are described in EP 0 506 400 B1. This patent describes a scheme that can transmit two different data streams on a single carrier signal. A simple addition process achieves the combination of the two data streams, such that a modifier 8 QAM signal is produced. The 8 QAM signal includes constellation points representing both of the data streams. The different data streams can be reconstructed at a receiver by demodulating the constellation and separating out the data streams.

The scheme described in EP 0 506 400 B1 suffers from a number of disadvantages. It is quite difficult to separate out the two separate data streams once they have been transmitted via satellite, cable or the like. This is due to the fact that noise can be introduced during transmission, which makes it difficult to identify which point of the constellation relates to which data stream. In addition, the scheme is not suitable for use with transmission of data over non-linear channels. This is due to the fact that changes in amplitude force the signal transponder to operate in a non-linear fashion, which means that power requirements are always changing. This is a major disadvantage in satellite broadcast systems.

It is one object of the present invention to provide an improved hierarchical coding scheme that overcomes at least some of the disadvantages of the prior art.

According to a first aspect of this invention there is provided a method of coding a plurality of data streams, each having a plurality of data bits, onto a carrier signal, the method comprising the steps of: applying each data bit of a first one of the plurality of data streams to a generator; applying each data bit of a second data stream of the plurality of data streams to said generator; said generator using the data bits of said first data stream to modify said second data stream so as to generate a coded data stream; combining the first data stream with the coded data stream to form a resultant coded data stream representative of bits of both the first data stream and the second data stream; and modulating a carrier signal with the resultant coded data stream.

The method has a number of advantages. The method uses an orthogonal code sequence to generate the modulation, which means it is easier to identify the two separate data streams. The method also provides extra channel capacity, or an additional unrelated channel, which ensures a higher data carrying capacity.

According to a second aspect of this invention there is provided a coder for encoding a plurality of data streams, each having a plurality of data bits, onto a carrier signal, comprising a generator for receiving each bit of a first one of the plurality of data streams and for receiving each data bit of a second data stream of the plurality of data streams, said generator using the data bits of the first data stream to modify said second data stream so as to generate a coded data stream; means for combining the first data stream with the coded data stream to form a resultant coded data stream representative of bits of both the first data stream and the second data stream; and modulator means for modulating the resultant coded data stream with a carrier signal.

The coder has the advantage that additional bits are mapped into orthogonal two bit combinations, which are then modulated onto the first data stream. A correlation technique is used to aid the detection of bit errors, synchronisation and timing. Secondly, the additional bits are not necessarily a subset of the base bits. The additional bits may be carrying a completely separate channel to the base channel.

According to a third aspect of this invention there is provided a receiver for receiving a resultant code generated by the steps of: applying each data bit of a first one of the plurality of data streams to a generator; applying each data bit of a second data stream of the plurality of data streams to said generator; said generator using the data bits of said first data stream to modify said second data stream so as to generate a coded data stream; combining the first data stream with the coded data stream to form a resultant coded data stream representative of bits of both the first data stream and the second data stream; and modulating a carrier signal with the resultant coded data stream, said receiver comprising:
a demodulator for demodulating, using a local carrier signal, the carrier signal modulated by the resultant coded data stream, to re-produce the resultant coded data stream;
soft metric means and decoder means for decoding the resultant coded data stream to re-produce the first data stream;
converter means for converting the first data stream into a vector bit data stream;
correlation and subtraction means for correlating the resultant coded stream with the orthogonal data stream to form a subtracted output; and
further soft metrics means and further decoder means for producing an output representative of the second data stream.

Reference will now be made, by way of example, to the accompanying drawings, in which:
Figure 1 is block diagram of a first embodiment of a coder according to the present invention;
Figure 2 is a flow diagram showing the process of the Figure 1 coder;
Figure 3 is a vector diagram for explaining the functionality of the invention in greater detail;
Figure 4 is a constellation diagram showing how two data streams from Figure 1 can be represented;
Figure 5 is a block diagram of a second embodiment of a coder according to the present invention;
Figure 6 is a flow diagram showing the process of the Figure 5 coder;
Figure 7 depicts constellation diagrams showing how the resultant transmitted signal from Figure 5 can be represented in various manners; and
Figure 8 is a block diagram of a receiver according to an aspect of the present invention.

In the Figures like reference numerals denote like parts.

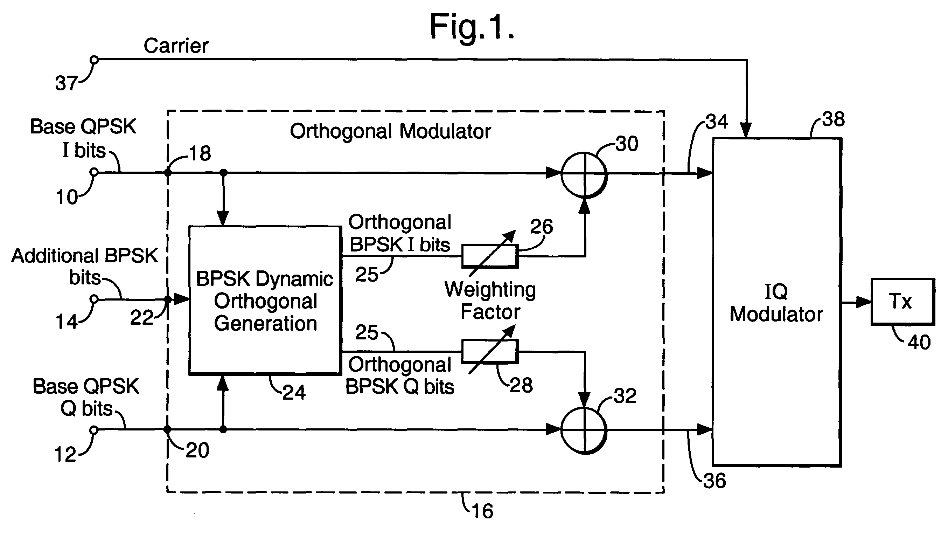

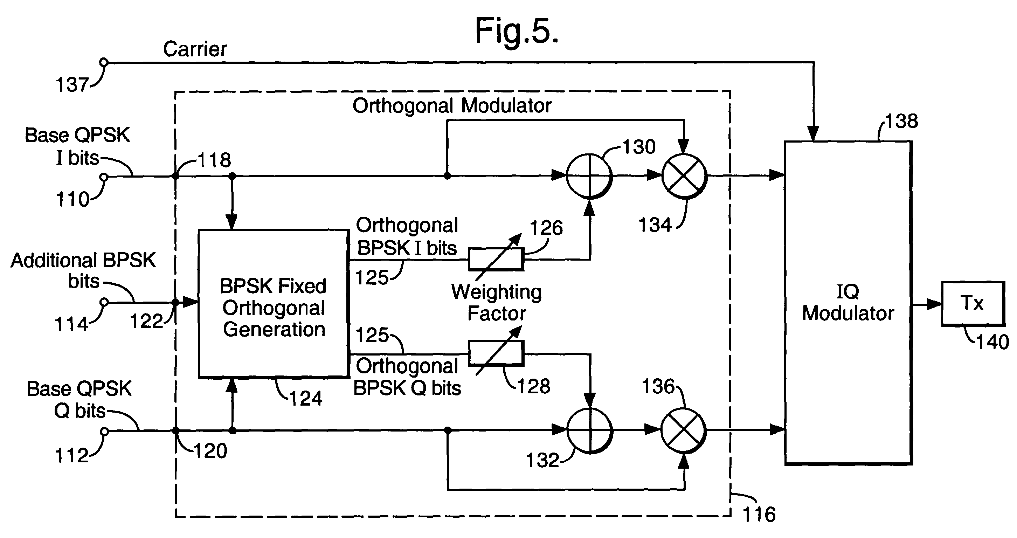

The present invention involves superimposing an "additional" Binary Phase Shift Key (BPSK) modulation, on top of a "base" QPSK modulation so that the two data streams can be carried together. Primary BPSK data bits are mapped into orthogonal IQ chips. A chip is a representation of the single bit by a vector. These chips are then modulated with the "base" Quadrature Phase Shift Key (QPSK) bits to form a near 8-PSK constellation with 8 points. The orthogonal nature of the modulation may then be used in the receiver to aid the demodulation and synchronisation of the constellation as will be described in greater detail below. There are two orthogonal coding methods described below, dynamic orthogonal coding, with reference to Figures 1 to 4, and fixed orthogonal coding, with reference to Figures 5 to 7.

Figure 1 shows a possible architecture for the dynamic orthogonal coded modulator. Two data streams A and B are to be transmitted on the same carrier signal. The data streams may be of any type including true data streams, digital television signals, audio signals or any of many other types of signal. In the example shown, data stream A is represented by a base QPSK signal which comprises a real and imaginary part. The two parts of the base QPSK signal are applied to terminals 10 and 12 respectively. Data stream B is represented by a BPSK signal applied to terminal 14.

The two QPSK signals at terminals 10 and 12 and the BPSK signal at terminal 14 are input to an Orthogonal Modulator 16. The Orthogonal Modulator includes three inputs 18, 20 and 22 connected to terminals 10, 12 and 14 respectively, a BPSK Dynamic Orthogonal Generator (BDOG) 24, two weighting blocks 26 and 28 and two summing blocks 30 and 32. Two outputs 34 and 36 from the BDGO 24 are passed through an IQ modulator 38 receiving a carrier signal at input terminal 37 to produce a resultant vector or signal applied to a transmitter 40.

In the example shown the base or main signal is a base QPSK IQ signal. This can be represented by a two bit combination (dibit) or vector as is seen in the first column of Table 1 shown below. The additional signal is a BPSK single data bit (i.e. 1 or -1) as is shown in the second column of Table 1 and is represented by two chips as can also be seen in Table 1.

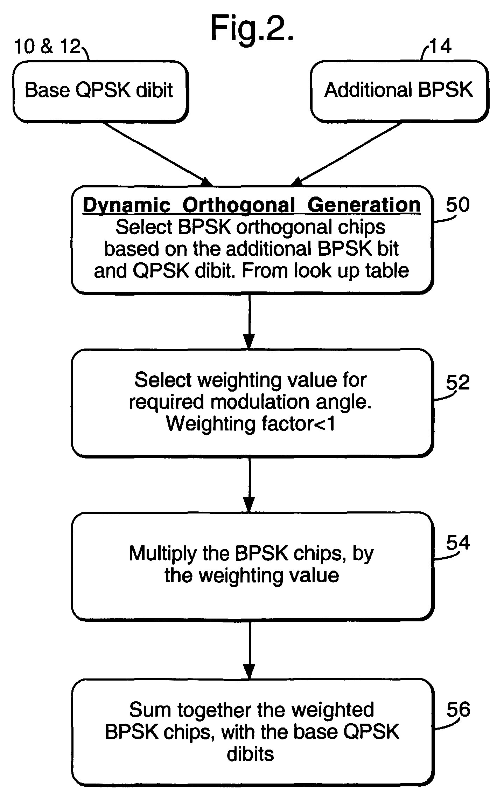

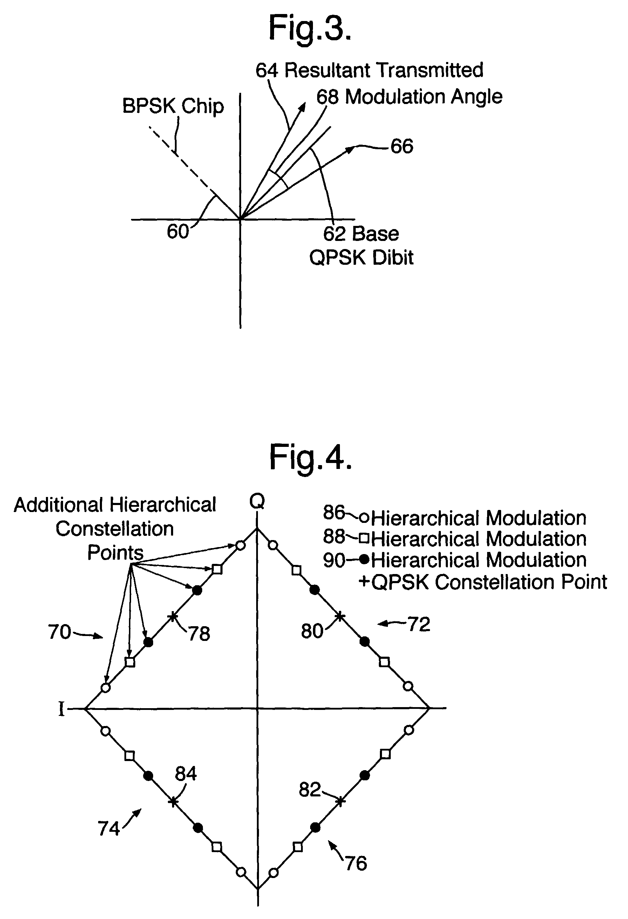

Referring now to Figure 2, a flow diagram of the coding process is shown. The base QPSK dibit and the additional BPSK data bit are passed into the BDOG 24 (Block 50). The BDOG selects a pair of BPSK chips or IQ dibits based on the values of the BPSK bit and the QPSK dibit. The selection is made from a look up table or another equivalent process. Table 1 below represents one such look up table and shows the possible mappings for this example. The values of the BPSK chips are variable depending on the values of the BPSK bit and the QPSK dibit and this coding process is thus referred to as dynamic orthogonal coding. Coding the QPSK two bit combination with this scheme produces a near 8-PSK modulation constellation as can be seen in Figure 4. The output from the step described above is a two chip vector or BPSK IQ dibits on lines 25 in Figure 1.

The BPSK IQ dibits on lines 25 are then passed through the two weighting blocks 26 and 28 in Figure 1 and a weighting factor <1 is selected (block 52 of Figure 2). The BPSK IQ dibits are then multiplied by the weighting factor (block 54 of Figure 2). The weighted BPSK IQ dibits and the base QPSK IQ dibits are then summed with summers 30 and 32 of Figure 1 (block 56 of Figure 2).

In the examples described herein the relationship between the QPSK dibits and the BPSK dibits is that they are orthogonal. It will be appreciated that this is not the only relationship that can be used. Other relationships include near orthogonality, or any other appropriate relationship. Obviously, if other relationships are used, the look up table and details of the apparatus and method may vary in accordance therewith.

**Table 1**

| Orthogonal Mapping for Near PSK modulation. | | | | | |
|---|---|---|---|---|---|
| Base QPSK IQ Two bit combination | | Additional BPSK Bits | | | |
| | | 1 | | -1 | |
| I | Q | I' | Q' | I' | Q' |
| 1 | 1 | 1 | -1 | -1 | 1 |
| 1 | -1 | 1 | 1 | -1 | -1 |
| -1 | 1 | -1 | -1 | 1 | 1 |
| -1 | -1 | -1 | 1 | 1 | -1 |

Referring again to Table 1 and to Figure 3, if the Base QPSK IQ two bit combination or vector is (1,1) and the additional BPSK bit is (-1), then an additional BPSK two bit combination or vector (-1,1) is selected, as described above with reference to Figures 1 and 2. The additional vector (-1,1) is, thus, orthogonal to the base vector (1,1). The base vector (1,1) is then modulated with the weighted additional vector (-1,1) to produce the resultant transmitted vector. The vectors are shown in Figure 3. The weighted additional (BPSK) vector is shown as 60. The length of the vector 60 is dependent on the weighting factor used. The Base (QPSK) vector is shown as 62. The resultant transmitted vector is shown as 64. If the additional BPSK bit is (+1) rather than (-1) the resultant transmitted vector will be as shown at 66. The modulation angle 68 is clearly dependent on the weighting factor. If the weighting factor is large then modulation angle will also be large. The resultant transmitted vector undergoes a modulation to yield eight distinguishable points on a constellation (see Figure 4 and description thereof).

Figure 4 shows a constellation that is achieved after weighted multiplication of the BPSK orthogonal chips to the base QPSK two bit combination. The constellation is effectively split into four quadrants 70, 72, 74 and 76 and includes two constellation points in each quadrant (although more are shown and will be explained below). If there were no modulation of the QPSK signal the resultant constellation would include four QPSK constellation points 78, 80, 82 and 84, one in each quadrant. However, using the modulation technique described the QPSK constellation points would not be identifiable in the resultant constellation. Instead, the constellation would include two constellation points in each quadrant. The actual constellation points would depend on the modulation angle. Several different constellation points are shown in Figure 4, which have been generated by using different weighting Factors and/or modulation angles as described above. The different constellation points are identified by different symbols. Where the modulation angle is large symbol 86 represents the constellation points. Where the modulation angle is intermediate, symbol 88 represents the constellation points. Where the modulation angle is small, symbol 90 represents the constellation points.

The distance between the two constellation points in each quadrant is determined by weighting the amplitude of the BPSK vector before it is multiplied with the Base QPSK vector. Note how the constellation points do not lie on the unit circle as for a normalised constellation. The shape mapped out by the constellation points is an important feature of the orthogonal modulation scheme of the present invention as will be appreciated later.

In a second embodiment of the present invention a fixed orthogonal code modulation scheme may be used. Figure 5 shows an example of the architecture for this scheme. Two data streams A and B are to be transmitted on the same carrier signal. The data streams may be of any type including true data streams, digital television signals, audio signals or any of many other types of signal. In the example shown data stream A is represented by a base QPSK signal which comprises a real and imaginary part. The two parts of the base QPSK signal are applied to terminals 110 and 112 respectively in Figure 5. Data stream B is represented by a BPSK signal applied to terminal 114. Two QPSK signals at terminals 110 and 112 and the BPSK signal at terminal 114 are input to an Orthogonal Modulator 116. The Orthogonal Modulator includes three inputs 118, 120 and 122 connected to terminals 110, 112 and 114 respectively, a BPSK Fixed Orthogonal Generator (FDOG) 124, two weighting blocks 126 and 128, two summing blocks 130 and 132 and two multipliers 134 and 136. Two outputs from the FDGO 124 are passed through an IQ modulator 138 to produce a resultant vector or signal transmitted by transmitter 140.

In the example shown the base or main signal is a base QPSK IQ signal. This can be represented by a two bit combination (dibit) or vector, as is seen in the first column of Tables 2 and 3 shown below. The additional signal is a BPSK single data bit (i.e. 1 or -1), as is shown in the second column of Tables 2 and 3, and is represented by two chips, as can also be seen in Tables 2 and 3.

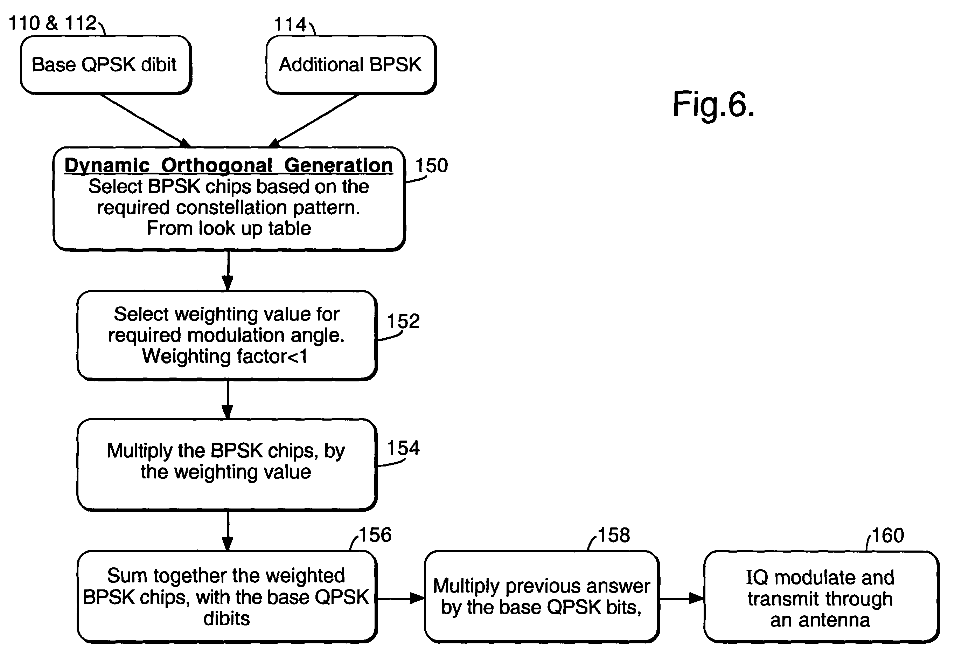

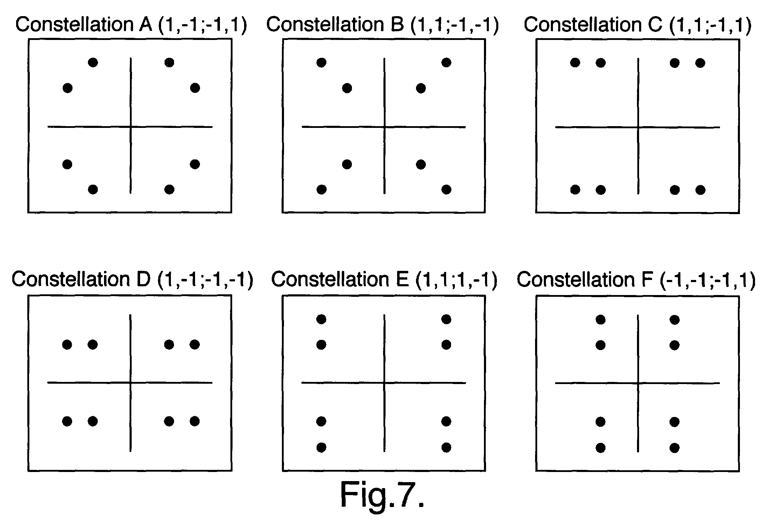

Referring now to Figure 6, a flow diagram of the fixed coding process is shown. The base QPSK dibit and the additional BPSK data bit are passed into the FDOG 124 (Block 150 of Figure 6). The FDOG selects a pair of BPSK chips or IQ dibits based on the values of the BPSK bit and the QPSK dibit. The selection is made from a look up table or another equivalent process. Tables 2 and 3 below represent two such look up tables and show the possible mappings for this fixed coding example. The values of the BPSK chips are fixed and depend on the values of the BPSK bit and the QPSK dibit and this coding process is thus referred to as fixed orthogonal coding. Coding the QPSK two bit combination with this scheme produces a modulation constellation, as can be seen in Figure 7. The output from the step described above is a two chip vector or BPSK IQ dibits on lines 125 in Figure 5.

The BPSK IQ dibits on lines 125 are then passed through the two weighting blocks 126 and 128 in Figure 5 and a weighting factor <1 is selected (block 152 of Figure 6). The BPSK IQ dibits are then multiplied by the weighting factor (block 154 of Figure 6). The weighted BPSK IQ dibits and the base QPSK IQ dibits are then summed with summers 130 and 132 of Figure 5 (block 156 of Figure 6). The answers from the summers are then multiplied by the base QPSK IQ dibits (block 158 of Figure 6). The resultant transmitted signal is then generated by the IQ modulator having a carrier input at terminal 137 and transmitted through an appropriate antenna (block 160 of Figure 6).

**Table 2**

| Orthogonal mapping for one example of fixed orthogonal coding. | | | | | |
|---|---|---|---|---|---|
| Base QPSK IQ Two bit combination | | Additional BPSK Bits | | | |
| | | 1 | | -1 | |
| I | Q | I' | Q' | I' | Q' |
| 1 | 1 | 1 | -1 | -1 | 1 |
| 1 | -1 | 1 | -1 | -1 | 1 |
| -1 | 1 | 1 | -1 | -1 | 1 |
| -1 | -1 | 1 | -1 | -1 | 1 |

**Table 3**

| Orthogonal mapping for a second example of fixed orthogonal coding. | | | | | | | |
|---|---|---|---|---|---|---|---|
| Base QPSK IQ Two bit combination | | Additional BPSK Bits | | | | | |
| | | 1 | | | -1 | | |
| I | Q | I' | | Q' | I' | | Q' |
| 1 | 1 | 1 | | 1 | -1 | | 1 |
| 1 | -1 | 1 | | 1 | -1 | | -1 |
| -1 | 1 | 1 | | 1 | -1 | | -1 |
| -1 | -1 | 1 | | 1 | -1 | | -1 |

In fixed orthogonal coding the additional BPSK two bit code is fixed for every base QPSK two bit combination. The additional two bit code used depends on how the user wishes to configure the resultant constellation. Coding the QPSK two bit combination with this scheme produces up to 6 different modulation constellations, dependent on the fixed coding that is applied to the QPSK two bit combinations. The different constellations are shown in Figure 7. Constellation A in Figure 7 is the result from coding using table 2 and constellation B in Figure 7 is the result from coding using table 3. Each constellation has four quadrants. The distance between the two constellation points in each quadrant is determined by weighting the amplitude of the BPSK vector before it is multiplied with the base QPSK vector.

Once the two data streams have been modulated in accordance with one of the above identified schemes, the resultant transmitted vector or signal is transmitted via any known medium to one or more receivers. The medium may include satellite, cable and terrestrial transmissions.

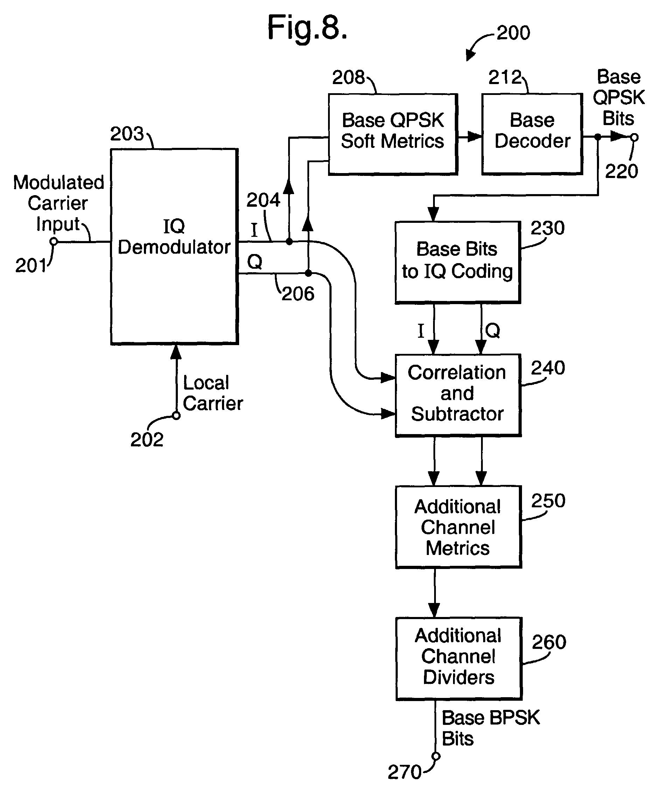

Figure 8 shows in block schematic form the architecture of a receiver 200 capable of receiving and decoding the modulated carrier transmitted by transmitter 40. The constellations (shown in Figures 4 or 7) are demodulated, as described below. The demodulation is used firstly to determine the base QPSK two-bit combination with a Quasi Error Free (QEF) success rate and the additional BPSK bits with a lower bit error probability. The base QPSK is then correlated with the additional BPSK to produce a correlation sum and difference. The combination of correlation sum and difference yields extra information on whether the base and additional bit combination has been received in error, the degree of synchronisation of the base and additional data and how close the symbol timing is to an optimum. The correlations used can range from a simple subtraction to more complex phase independent techniques depending on the performance required.

Referring to Figure 8, the receiver 200 receives the modulated carrier signal at terminal 201 and the signal is demodulated using a local carrier applied to terminal 202 in an IQ demodulator 203 to produce I and Q symbols on lines 204 and 206 respectively. The I and Q symbols represent the combined QPSK and BPSK signals on lines 34, 36. The I and Q symbols are passed along a first processing path which includes a base QPSK soft metrics processor 208 and a base decoder 212 for decoding the I and Q symbols to re-produce the first data stream of base QPSK bits to form a first output at terminal 220. The base decoder 212 may be an "inner code" decoder only. Soft metrics may be as simple or complex as necessary. The first processing path also includes a base bits to IQ coding converter 230 to convert the base QPSK bits into I and Q coded signals.

The resultant coded stream 204, 206 is correlated and subtracted with the I, Q coded signals by correlator and subtractor 240. The output from the correlator and subtractor is applied to an additional soft metrics processor 250 and a further decoder 260 to produce a second output of the additional BPSK bits at terminal 270.

The I and Q symbols are processed through the first processing path, such that the original base QPSK bits are extracted and identified. The output 220 from the first processing path is the original base QPSK signal. This first processing path has the function of a known basic QPSK decoder. The decoded original base bits are then converted into their I and Q components, re-coded and passed to the correlator and subtractor 240 where the resultant transmitted or combined signal (I and Q components) are correlated with the re-coded QPSK signal to produce a correlation sum and difference. The combination of correlation sum and difference yields extra information with regards to whether the base (QPSK) and additional (BPSK) bit combination have been received in error, how well the base and additional data is synchronised, and how close the symbol timing is to the optimum. The output from the decoder 260 is the additional BPSK signal. Thus, the original information has been retrieved.

It will be appreciated by those skilled in the art that the above techniques can be applied to many different environments. The coding schemes may be used to combine two or more data streams to form a single carrier signal which, on receipt at a remote location, can be decoded to re-form the original data streams. The data streams could be a High Definition Television Signal (HDTV), a Standard Definition Television Signal (SDTV), a data stream, advertisements, personal information such as banking or shopping details, etc. The combination of signals can be any one of the above with any other signal.

It will be appreciated that if more than two signals are superimposed on each other different coding methods may be required, for example 8 or 16 QAM, Turbo coding or any other coding techniques.

The constellations illustrated are only shown as examples, different resultant constellations may be produced depending on the types of coding used. The apparatus diagrams show one example of possible implementations of the invention. However, there are many different implementations that would have the same functionality.

In the examples shown, the additional information has only been a single data bit. It is possible that more than one data bit could be combined with a base signal, but differing coding and decoding methods may be required. The above description has focussed predominantly at the 'bit level'. It will be understood that a data stream merely comprises a plurality of bits and that it is easily appreciated that the invention applies at the 'signal level' as well as the 'bit level'.

The invention has a number of advantages. The scheme uses an orthogonal code sequence to generate the modulation, which means it is easier to identify the two separate data streams. This scheme provides extra channel capacity, or an additional unrelated channel, which ensures a higher data carrying capacity. The invention is particularly suitable for channels with peak power constraints or non-linear channels, for example satellite transponders. Moreover, the invention makes improved recovery of secondary data without the form of the transmission and reception giving any significant degradation of primary channel data.

## Claims

1. A method of coding a plurality of data streams, each having a plurality of data bits, onto a carrier signal (40), the method comprising the steps of: applying each data bit of a first one of the plurality of data streams (10, 12) to a generator (24); applying each data bit of a second data stream (14) of the plurality of data streams to said generator; said generator using the data bits of said first data stream to modify said second data stream so as to generate a coded data stream (I' Q', 25); combining the first data stream (10, 12) with the coded data stream (I' Q', 25) to form a resultant coded data stream (34, 36) representative of bits of both the first data stream and the second data stream; and modulating a carrier signal with the resultant coded data stream.

2. A method as claimed in claim 1, wherein the generating step comprises generating a second code (I' Q') to be orthogonal to a first code (IQ) derived from said first data stream.

3. A method as claimed in claim 1 or 2, further comprising providing the first data stream as a QPSK IQ stream.

4. A method as claimed in any preceding claim, further comprising providing the second data stream as a BPSK stream.

5. A method as claimed in claim 2, wherein the step of generating the second code comprises using a look-up table to determine the second code.

6. A method as claimed in claim 2, further comprising providing a dynamic relationship between the first and second codes.

7. A method as claimed in claim 2, further comprising providing a fixed relationship between the first and second codes.

8. A method as claimed in any preceding claim, further comprising providing the first data stream as a digital television signal.

9. A method as claimed in any preceding claim, further comprising transmitting the resultant code to one or more receivers.

10. A coder for encoding a plurality of data streams, each having a plurality of data bits, onto a carrier signal (40), comprising a generator (24) for receiving each bit of a first one of the plurality of data streams (10, 12) and for receiving each data bit of a second data stream (14) of the plurality of data streams, said generator using the data bits of the first data stream to modify said second data stream so as to generate a coded data stream (I' Q', 25); means for combining the first data stream (10, 12) with the coded data stream (I' Q', 25) to form a resultant coded data stream (34, 36) representative of bits of both the first data stream and the second data stream; and modulator means for modulating the resultant coded data stream with a carrier signal.

11. A coder as claimed in claim 10, wherein the generator means produces a second code which is orthogonal to a first code derived from said first data stream.

12. A coder as claimed in claim 10 or 11, wherein the first data stream is a QPSK stream.

13. A coder as claimed in any of claims 10 to 12, wherein the second data stream is a BPSK stream.

14. A coder as claimed in any of claims 11 to 13, wherein a look-up table is used to determine the second code.

15. A coder as claimed in any of claims 11 to 14, wherein there is a dynamic relationship between the first and second codes.

16. A coder as claimed in any of claims 11 to 14, wherein there is a fixed relationship between the first and second codes.

17. A coder as claimed in any of claims 10 to 16, wherein the first data stream is a digital television signal.

18. A coder as claimed in any of claims 10 to 17, wherein the coder further comprises a transmitter (40) for transmitting the resultant signal to one or more receivers.

19. A receiver (200) for receiving a resultant code generated by the steps of: applying each data bit of a first one of the plurality of data streams (10, 12) to a generator (24); applying each data bit of a second data stream (14) of the plurality of data streams to said generator; said generator using the data bits of said first data stream to modify said second data stream so as to generate a coded data stream (I' Q', 25); combining the first data stream (10, 12) with the coded data stream (I' Q', 25) to form a resultant coded data stream (34, 36) representative of bits of both the first data stream and the second data stream; and modulating a carrier signal with the resultant coded data stream, said receiver comprising:
a demodulator (203) for demodulating, using a local carrier signal, the carrier signal modulated by the resultant coded data stream, to re-produce the resultant coded data stream (204, 206)
soft metric means (208) and decoder means (212) for decoding the resultant coded data stream (204, 206) to re-produce the first data stream (10, 12);
converter means (230) for converting the first data stream into a vector bit data stream;
correlation and subtraction means (218) for correlating the resultant coded stream (204, 206) with the orthogonal data stream to form a subtracted output; and
further soft metrics means (250) and further decoder means (260) for producing an output representative of the second data stream.

20. A receiver as claimed in claim 19, wherein the vector bit data stream is an orthogonal bit data stream.
